Europäisches Patentamt

European Patent Office

Office européen des brevets

(11) Veröffentlichungsnummer: **0 105 457**
**B1**

(12) # EUROPÄISCHE PATENTSCHRIFT

(45) Veröffentlichungstag der Patentschrift:
13.08.86

(51) Int. Cl.⁴: **B 32 B 17/10, C 03 C 27/12**

(21) Anmeldenummer: **83109656.5**

(22) Anmeldetag: **28.09.83**

(54) **Verfahren zum Herstellen von Verbundglas.**

(30) Priorität: **29.09.82 DE 3235964**

(43) Veröffentlichungstag der Anmeldung:
**18.04.84 Patentblatt 84/16**

(45) Bekanntmachung des Hinweises auf die Patenterteilung:
**13.08.86 Patentblatt 86/33**

(84) Benannte Vertragsstaaten:
**AT BE CH DE FR GB IT LI NL SE**

(56) Entgegenhaltungen:
**EP-A-0 056 719**
**CH-A-473 677**
**DE-C-1 079 291**
**FR-A-1 564 493**
**FR-A-1 604 536**
**FR-A-2 360 527**
**FR-A-2 395 832**
**FR-A-2 414 482**

**PATENTS ABSTRACTS OF JAPAN, Band 6, Nr. 261**
**(C-141) 1139 , 21. Dezember 1982**

(73) Patentinhaber: **IMC Acrylguss GmbH,**
**Kronprinzenstrasse 11, D-5630 Remscheid (DE)**

(72) Erfinder: **Melchior, Bernd, Burger Strasse 255,**
**D-5630 Remscheid (DE)**

(74) Vertreter: **Patentanwaltsbüro Cohausz & Florack,**
**Postfach 14 01 47, D-4000 Düsseldorf 1 (DE)**

## Beschreibung

Die Erfindung betrifft ein Verfahren zum Herstellen von Verbundglasscheiben mit zwei zueinander parallel angeordneten Glasscheiben, zwischen denen eine Kunststoffschicht einliegt, in dem eine Seitenfläche der Scheiben mit einer Strahlung reflektierenden und/oder absorbierenden Schicht versehen wird.

Ein Verfahren dieser Art ist aus der FR-A 2 414 482 bekammt. Aus dieser Druckschrift geht jedoch nicht hervor, auf welche Art der Zwischenraum zwischen den beiden Scheiben mit dem Kunststoff ausgefüllt wird.

Ferner ist ein Verfahren zum Herstellen von als Sicherheitsglas dienenden Verbundglasscheiben bekannt. In diesem Verfahren wird nach dem Bedampfen einer der beidem Innenseiten der Glasscheiben eine Folie zwischen die Glasscheiben eingelegt. Durch die eingelegte Folie wird jedoch die bedampfte Schicht beschädigt.

Der Erfindung liegt die Aufgabe zugrunde, ein Verfahren zum Herstellen von Verbundglasscheiben der eingangs genannten Art zu schaffen, durch welches die reflektierende und/oder absorbierende Schicht von der den Zwischenraum ausfüllenden Kunststoffschicht besonders geschützt wird.

Diese Aufgabe wird erfindungsgemäß dadurch gelöst, daß diejenige Seitenfläche, die der zweiten Scheibe zugekehrt wird, mit einem Metall bedampft wird, daß danach die Scheiben mit geringem Abstand zueinander parallel gestellt werden und der Zwischenraum zwischen den beiden Scheiben mit einem flüssigen und härtbaren Kunststoff ausgegossen wird, der danach erhärtet.

Wird die reflektierende Schicht durch Aufdampfen eines Metalls hergestellt, so kann sie sehr dünn sein, so daß sie porös ist. Beim Ausfüllen des Zwischenraums zwischen den Scheiben tritt der flüssige Kunststoff durch die Poren der Metallschicht hindurch. Der weiche und plastische Kunststoff übt damit Haftkräfte auf die Metallschicht aus und bettet die Metallteilchen vollkommen in sich ein. Dadurch wird die Metallschicht zusätzlich durch den Kunststoff geschützt.

Ein Verfahren zum Herstellen von Verbundglasscheiben, in dem der Zwischenraum zwischen parallel angeordneten Glasscheiben mit einem Kunststoff ausgegossen wird, ist zwar bekannt (FR-A-2 360 527 und EF-A-56 719), aber in diesen Verfahren stellt sich die erfindungsgemäße Aufgabe nicht, da diese Scheiben keine Metallschicht tragen.

Eine solche eingegossene oder eingedrückte Kunststoffschicht zerstört nicht die bedampfte Schicht. Es bilden sich keine Schlieren, Ablösungen, Entfärbungen oder Entmischungen der bedampften Schicht. Es wird eine sehr gute Haftung der beiden Scheiben aneinander erreicht. Es wird eine hohe Sicherheit erzielt, und es ist ein Rahmen nicht erforderlich. Das Gewicht der Gesamtscheibe ist gering, die Herstellung einfach und es wird eine lange Haltbarkeit geschaffen.

Vorteilhafte Ausgestaltungen der Erfindung sind in den Unteransprüchen aufgeführt.

Ein Ausführungsbeispiel des erfindungsgemäßen Verfahrens und ein danach hergestelltes Produkt wird im folgenden maher beschrieben.

Eine Flachglasscheibe 1 von z.B. 2 mm Stärke wird auf einer Seite mit einer oder mehreren Schichten 3, insbesondere Metall, bedampft, wodurch eine Reflexion und/ oder Absorption bestimmter Strahlen, insbesondere von Infrarotstrahlen, erzielt wird. Danach wird zu dieser Scheibe I eine zweite Scheibe 2 gleicher Stärke mit geringem Abstand, z.B. 2mm, derart parallel gestellt oder gelegt, daß die Beschichtung 3 der Scheibe 2 zugewandt ist. Darauf wird stirnseitig rundum der Zwischenraum durch ein T-Profil abgedichtet und ein härtbarer Kunststoff 4 eingegossen oder eingedrückt. Hierzu weist das Profil eine Kunststoff-Einlaßöffnung und eine Luftauslaßöffnung auf. Ein blasenfreies Füllen wird durch ein Schrägstellen oder Senkrechtstellen der Scheiben erreicht.

Der transparente Kunststoff kann danach durch Polymerisation, Addition oder Kondensation aushärten, z.B. durch Zufuhr von Wärme oder energiereicher Strahlung. Besonders vorteilhaft ist es, ein Methacrylsäuremethylester oder einen Silikonkautschuk zu verwenden.

Die Erfindung eignet sich für die verschiedensten Anwendungsgebiete. Beispielhaft werden die folgenden aufgezählt:
- Sonnenschutz und Wärmedämmung für Häuser, insbesondere Wohnhäuser, Hallen, gewerbliche Räume, Gewächshäuser,
- Sonnenschutz und Wärmedämmung für Fahrzeuge, insbesondere für Schiebedächer und Sonnenhebeldächer von LKW, Omnibus und Wohnwagen,
- nachträgliche, insbesondere zusätzliche Verglasung innen und außen vor Fenstern,
- in Streifen bzw. Profilen gefertigt für Rolläden und Jalousien. Hierdurch können durchsichtige Rolläden und Jalousien geschaffen werden, die im Sommer die Sonnenstrahlen abhalten und im Winter wärmedämmend wirken. Die aus dem Raum abgestrahlte Infrarotstrahlung wird zum Raum hin zurückreflektiert.
- Zur Abdeckung von Sonnenzellen, -kollektoren, -absorbern
- Als Bestandteil von Diebstahlsicherungsanlagen. Besonders vorteilhaft ist es, wenn die Schicht elektrisch leitend ist, da dann die Kunststoffscheibe Bestandteil einer Diebstahlsicherungsanlage sein kann. Die Schicht kann dann Teil eines Stromkreises sein, dessen Widerstand gemessen wird und, sobald die Scheibe leicht angebrochen, angekratzt oder zerstört wird, sich der elektrische Widerstand ändert und damit Alarm ausgelöst wird. Ferner eignet sich diese leitende Schicht auch zur Aufheizung der Scheibe.
- Als aufheizbare Scheiben für Häuser und Fahrzeuge gegen Beschlagen durch Wasser, gegen Eis und Schnee.
- Als Verbundsicherheitsglas.

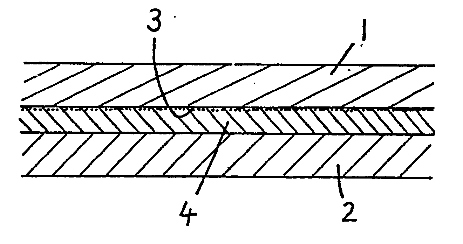

## Patentansprüche

1. Verfahren zum Herstellen von Verbundglasscheiben mit zwei zueinander parallel angeordneten Glasscheiben (1, 2), zwischen denen eine Kunststoffschicht (4) einliegt, in dem eine Seitenfläche der Scheiben (1, 2) mit einer Strahlung reflektierenden und/oder absorbierenden Schicht (3) versehen wird, dadurch gekennzeichnet, daß diejenige Seitenfläche, die der zweiten Scheibe (2) zugekehrt wird, mit einen Metall bedampft wird, daß danach die Scheiben (1, 2) mit geringem Abstand zueinander parallel gestellt werden und der Zwischenraum zwischen den beiden Scheiben (1, 2) mit einem flüssigen und härtbaren Kunststoff (4) ausgegossen wird, der danach erhärtet.

2. Verfahren nach Anspruch 1, dadurch gekennzeichnet, dag der Zwischenraum zwischen den beiden Scheiben (1, 2) mit einem transparenten Kunststoff (4) ausgegossen wird.

3. Verfahren nach Anspruch 1 oder 2, dadurch gekennzeichnet, daß der härtbare Kunststoff ein Acrylat oder Silikonkautschuk ist.

4. Verfahren nach einem der Ansprüche 1 bis 3, dadurch gekennzeichnet, daß der Kunststoff nach dem Erhärten elastisch ist.

5. Verfahren nach einem der Ansprüche 1, 2 oder 4, dadurch gekennzeichnet, daß der Kunststoff ein höherer Ester ist.

6. Verfahren nach einem der Ansprüche 1 bis 5, dadurch gekennzeichnet, daß der Kunststoff einen Weichmacher enthält.

7. Verfahren nach einem der Ansprüche 1 bis 6, dadurch gekennzeichnet, daß der Kunststoff nicht vollständig ausgehärtet wird.

8. Verfahren nach einem der Ansprüche 1 bis 7, dadurch gekennzeichnet, daß vor dem Eingießen oder Eindrücken des Kunststoffs beide Scheiben (1, 2) zumindest auf drei Seiten entlang der Ränder mit einem abdichtenden Profil umgeben werden.

9. Verfahren nach Anspruch 8, dadurch gekennzeichnet, daß das Profil eine Kunststoff-Einlaß- und Luft-Auslaßöffnung freiläßt.

10. Verfahren nach Anspruch 8 oder 9, dadurch gekennzeichnet, daß während des Eingießens oder Eindrückens des Kunststoffs die Luftauslaßöffnung höher liegt als die Kunststoff-Einlaßöffnung.

11. Verfahren nach einem der Ansprüche 8 bis 10, dadurch gekennzeichnet, daß während des Eingießens oder Eindrückens des Kunststoffs die Scheiben einen winkel größer Null zu einer Waagerechten bilden.

12. Anwendung des Verfahrens nach einem der Ansprüche 1 bis 11 zur Herstellung von Scheiben für Fenster und Dächer von Gebäuden und Fahrzeugen.

13. Anwendung des Verfahrens nach einem, der Ansprüche 1 bis 11 zur Herstellung von Profilen für Rolläden und Jalousien.

14. Anwendung des Verfahrens nach einem der Ansprüche 1 bis 11 zur Herstellung von Scheiben für Sonnenzellen, -kollektoren und -absorbern.

15. Anwendung des Verfahrens nach einem der Ansprüche 1 bis 11 zur Herstellung von Scheiben, deren reflektierende und/oder absorbierende Schicht elektrisch leitend ist und zur Erwärmung und/oder Diebstahlsicherung benutzt wird.

## Claims

1. Process for manufacturing laminated glass panes having two glass panes (1 2) which are arranged parallel to each other and between which a layer of plastics material (4) lies, in which process one side face of the panes (1,2) is provided with a layer (3) that reflects and/or absorbs radiation, characterised in that the side face that faces the second pane (2) is vapour-deposited with a metal, the panes (1,2) are then placed parallel to each other with a narrow spacing and the space between the two panes (1,2) is filled with a liquid and hardenable plastics material (4) that subsequently hardens.

2. Process according to claim 1, characterised in that the space between the two panes (1,2) is filled with a transparent plastics material (4).

3. Process according to claim 1 or 2, characterised in that the hardenable plastics material is an acrylate or a silicon rubber.

4. Process according to one of claims 1 to 3, characterised in that after hardening the plastics material is elastic.

5. Process according to one of claims 1, 2 or 4, characterised in that the plastics material is a higher ester.

6. Process according to one of claims 1 to 5, characterised in that the plastics material contains a plasticiser.

7. Process according to one of claims 1 to 6, characterised in that the plastics material is not completely hardened.

8. Process according to one of claims 1 to 7, characterised in that before the plastics material is poured or pressed in, the two panes (1,2) are surrounded at least on three sides along the edges by a sealing profile.

9. Process according to claim 8, characterised in that the profile leaves open an inlet aperture for plastics material and an outlet aperture for air.

10. Process according to claim 8 or 9, characterised in that while the plastics material is poured or pressed in, the outlet aperture for air is higher than the inlet opening for plastics material.

11. Process according to one of claims 8 to 10, characterised in that while the plastics material is poured or pressed in, the panes form an angle greater than zero to the horizontal.

12. Use of the process according to one of claims 1 to 11 for the manufacture of panes for windows and for roofs of buildings and vehicles.

13. Use of the process according to one of claims 1 to 11 for the manufacture of profiles for shutters and blinds.

14. Use of the process according to one of claims 1 to 11 for the manufacture of panes for solar cells, collectors and absorbers.

15. Use of the process according to one of claims 1 to 11 for the manufacture of panes, the reflecting and/or absorbing layer of which is electrically conductive and is used for heating and/or protection against theft.

**Revendications**

1.- Procédé de fabrication de vitres en verre de sécurité feuilleté avec deux plaques de verre (1, 2) disposées parallèles entre elles entre lesquelles est disposée une couche de matière synthétique (4), dans lesquelles une face latérale des plaques (1, 2) est munie d'une couche (3) réfléchissant et/ou absorbant le rayonnement, caractérisé par le fait qu'on métallise sous vide la face latérale qui est tournée vers la seconde plaque (2), qu'on positionne ensuite les plaques (1, 2) parallèles entre elles à faible distance et qu'on coule dans l'intervalle entre les deux plaques (1, 2) une matière synthétique (4) fluide et durcissable qu'on durcifie ensuite.

2.- Procédé selon la revendication 1, caractérisé par le fait qu'on coule dans l'intervalle entre les deux plaques (1, 2) une matière synthétique (4) transparente.

3.- Procédé selon la revendication 1 ou 2, caractérisé par le fait que la matière synthétique durcissable est un acrylate ou un caoutchouc silicone.

4.- Procédé selon l'une des revendications 1 à 3, caractérisé par le fait que la matière synthétique est élastique après le durcissement.

5.- Procédé selon l'une des revendications 1, 2 ou 4, caractérisé par le fait que la matière synthétique est un ester supérieur.

6.- Procédé selon l'une des revendications 1 à 5, caractérisé par le fait que la matière synthétique contient un plastifiant.

7.- Procédé selon l'une des revendications 1 à 6, caractérisé par le fait qu'on ne durcifie pas complètement la matière synthétique.

8.- Procédé selon l'une des revendications 1 à 7, caractérisé par le fait que, avant de couler ou d'injecter la matière synthétique, on entoure les deux plaques (1, 2) au moins sur trois côtés, le long des bords, avec un profilé d'étanchéité.

9.- Procédé selon la revendication 8, caractérisé par le fait que le profilé ménage des ouvertures d'entrée de matière synthétique et d'échappement d'air.

10.- Procédé selon l'une des revendications 8 ou 9, caractérisé par le fait que, pendant le coulage ou l'injection de la matière synthétique. l'ouverture d'échappement d'air se trouve plus haut que l'ouverture d'entrée de matière synthétique.

11.- Procédé selon l'une des revendications 8 à 10, caractérisé par le fait que, pendant le coulage ou l'injection de la matière synthétique, les plaques forment avec la verticale un angle supérieur à zéro.

12.- Application du procédé, selon l'une des revendications 1 à 11, pour la fabrication des vitres pour fenètres et toits de maisons et de véhicules automobiles.

13. Application du procédé, selon l'une des revendications 1 à 11, pour la fabrication des profilés pour des volets roulants et des jalousies.

14.- Application du procédé, selon l'une des revendications 1 à 11, pour la fabrication des vitres pour des cellules, des collecteurs et des absorbeurs solaires.

15.- Application du procédé, selon l'une des revendications 1 à 11, pour la fabrication des vitres dont la couche réfléchissante et/ou absorbante est conductrice électriquement et est utilisée pour le chauffage et/ou la protection contre le vol.